# EUROPEAN PATENT APPLICATION

(11) **EP 4 783 424 A1**
(43) Date of publication of application: **29.07.2026**
(21) Application number: 24868082.9
(22) Date of filing: 30.08.2024
(51) Int. Cl.: H02K 5/06

(54) **INSERT MEMBER FOR ROTARY ELECTRIC MACHINE**

(30) Priority: 22.09.2023 JP 2023159275
(71) Applicant: TPR CO., LTD., Tokyo 100-0005 (JP); TPR INDUSTRY CO., LTD., Sagae-shi, Yamagata 990-0561 (JP)
(72) Inventor: SATO, Takashi, Sagae-shi, Yamagata 990-0561 (JP); TOKAIRIN, Yasutomo, Sagae-shi, Yamagata 990-0561 (JP); SEINO, Kazuki, Sagae-shi, Yamagata 990-0561 (JP)
(74) Representative: Novagraaf International SA
(86) International application number: PCT/JP2024/031148
(87) International publication number: WO 2025/063002

(57) **Abstract**

[Summary]

[Problem] An insert member for a rotary electric machine is provided which can improve joining strength between itself and a motor case.

[Solution] A plurality of protrusions are formed on an outer peripheral surface of the insert member having a substantially cylindrical shape. When a line segment parallel to an inner peripheral surface of the insert member and having a predetermined axial length is superimposed on one cut surface, which is obtained by cutting the insert member, a substantive portion region in which on the line segment, the protrusions overlaps with the line segment, and a non-substantive portion region in which on the line segment, the protrusions does not overlap with the line segment are defined when the line segment is superimposed on the one cut surface. When a value indicating a proportion of the substantive portion region on the line segment is defined as a substantive portion ratio, a graph in which values of a plurality of substantive portion ratios are sequentially plotted is termed a substantive portion aggregation chart. In an average substantive portion aggregation chart obtained from a plurality of cross sections, when a position where the average substantive portion ratio is 0 is set as a tip end portion on the chart and a position where the average substantive portion ratio exceeds 0.98 for the first time is set as a base end portion on the chart, an average maximum height of the protrusions which is a distance from the tip end portion on the chart to the base end portion on the chart is 0.08 % or more of an outer diameter of the insert member.

## Description

### [Technical Field]

The present invention relates to an insert member for a rotary electric machine.

### [Background Art]

Conventionally, an aluminum alloy is often used as a structural member in a motor case. In addition, in the motor case, a high-strength member made of an iron-based material and formed into a substantially cylindrical shape may be used as an insert member in order to reinforce a portion in which a stator is disposed. In this regard, it has been proposed to improve the fixing and holding properties of the insert member with respect to the motor case by providing irregularities on the outer peripheral surface of the insert member (for example, see Patent Literatures 1, 2, and 3).

### [Citation List]

### [Patent Literature]

[Patent Literature 1] Japanese Patent Laid-Open No. 2001-169500
[Patent Literature 2] Japanese Patent Laid-Open No. 2011-101513
[Patent Literature 3] Japanese Patent No. 6655560

### [Summary of Invention]

### [Technical Problem]

In a case where a motor case is formed of an aluminum alloy, the insert member described above may be cast and molded. The insert member is machined on its inner peripheral surface to fit onto an outer peripheral surface of a stator after casting, thereby serving as a stator holder. At this time, if the joining strength between the motor case and the insert member is insufficient, the insert member may be displaced with respect to the motor case, thereby causing runout of a motor shaft, which could result in a decrease in output due to increased friction and a decrease in durability due to increased vibration.

The present invention has been made in view of the above circumstances, and an object of the present invention is to provide an insert member for a rotary electric machine that can improve joining strength with a motor case.

### [Solution to Problem]

In order to solve the above problems, the present invention adopts the following configurations. An insert member for a rotary electric machine according to one aspect of the technology of the present disclosure is a substantially cylindrical insert member to be cast into an aluminum alloy motor case of the rotary electric machine, wherein a plurality of protrusions are formed on an outer peripheral surface of the insert member; in one cut surface, which is one of cut surfaces appearing one by one on both sides of a central axis of the insert member when the insert member is cut into two halves along an axial direction by a virtual plane including the central axis, the insert member defines, in a range of a predetermined axial length, a substantive portion (solid portion) region in which, on a line segment parallel to an inner peripheral surface of the insert member, the protrusions overlap with the line segment when the line segment is superimposed on the one cut surface, and a non-substantive portion (void portion) region in which, on the line segment, the protrusions do not overlap with the line segment when the line segment is superimposed on the one cut surface; on the line segment, a value indicating a proportion of the substantive portion region within the range of the predetermined axial length is defined as a substantive portion ratio; in the one cut surface of the insert member, sequentially plotting values of the substantive portion ratios at respective measurement points obtained by moving the line segment from tip end portions of the protrusions toward their base end portion side at a predetermined pitch along a height direction of the protrusions, and a diagram, in which the substantive portion ratio is represented on a horizontal axis and a distance from the tip end portion in the height direction is represented as a measurement height on a vertical axis, is defined as a substantive portion aggregation chart; an average substantive portion ratio is defined as an average of the substantive portion ratios at the respective measurement points determined by a plurality of the one cut surfaces, and the substantive portion aggregation chart in which the average substantive portion ratio is plotted is defined as an average substantive portion aggregation chart; in the average substantive portion aggregation chart, a position at which the average substantive portion ratio is 0 is defined as a tip end portion on the chart, and a position at which the average substantive portion ratio plotted in sequence from the tip end portion side toward the base end portion side exceeds 0.98 for the first time is defined as a base end portion on the chart; and when a distance from the tip end portion on the chart to the base end portion on the chart is defined as an average maximum height of the protrusions, the average maximum height of the protrusions is 0.08 % or more of an outer diameter of the insert member.

Also, in the insert member, the average maximum height of the protrusions may be formed within a range of 0.08 % or more and 1 % or less of the outer diameter of the insert member.

In addition, in the average substantive portion aggregation chart, a sum of the average substantive portion ratios in a range from a center position of the average maximum height of the protrusions to the base end portion on the chart, excluding a position of the base end portion on the chart, may be configured to be greater than a sum of the average substantive portion ratios in a range from the center position of the average maximum height of the protrusions to the tip end portion on the chart, excluding a position of the tip end portion on the chart.

Moreover, two or more measurement points, which are plotted in the average substantive portion aggregation chart, may be included in a range in which a difference in the average substantive portion ratio at the two or more measurement points is 0.10 or less and a difference in the measurement height at the two or more measurement points is 0.05 mm or more.

Further, a plurality of the average substantive portion ratios plotted in the average substantive portion aggregation chart may be configured to have a local maximum peak in the values of the average substantive portion ratios and a local minimum peak in the values of the average substantive portion ratios, and a position of the local maximum peak may be configured to appear closer to the tip end portion side on the chart than a position of the local minimum peak.

Furthermore, in the average substantive portion aggregation chart, a value of the average substantive portion ratio at the local minimum peak may be 0.08 or more.

In addition, in the average substantive portion aggregation chart, a difference between a value of the average substantive portion ratio at the local maximum peak and a value of the average substantive portion ratio at the local minimum peak may be 0.02 or more and 0.20 or less.

Moreover, in the average substantive portion aggregation chart, a value of the average substantive portion ratio at the local maximum peak may be 0.50 or less.

Further, on the outer peripheral surface of the insert member, the protrusions may be formed only in a partial region of the outer peripheral surface.

### [Advantageous Effects of the Invention]

According to the present invention, it is possible to provide an insert member for a rotary electric machine capable of improving joining strength with a motor case.

### [Brief Description of Drawings]

FIG. 1 is an overall view of an insert member for a rotary electric machine according to an embodiment, and an enlarged view of a part of an outer peripheral surface thereof.
FIG. 2 is a cross-sectional view illustrating an example of a predetermined cut surface of the insert member for a rotary electric machine according to the embodiment.
FIG. 3 is an average substantive portion (solid portion) aggregation chart illustrating a relationship between measurement height and average substantive portion ratio of the insert member for a rotary electric machine in one example according to the embodiment.
FIG. 4 is an average substantive portion aggregation chart of the insert member for a rotary electric machine in one example according to the embodiment.
FIG. 5 is an average substantive portion aggregation chart of the insert member for a rotary electric machine in one example according to the embodiment.

### [Mode for carrying out the Invention]

Hereinafter, an embodiment of the present invention will be described with reference to the drawings. The configurations described in the following embodiment are not intended to limit the technical scope of the invention unless otherwise specified. Each configuration in the following embodiment, a combination thereof, and the like are merely examples, and additions, omissions, substitutions, and other modifications of configurations can be made as appropriate without departing from the gist of the present invention.

### <Embodiment>

### [Structure and Manufacturing Method]

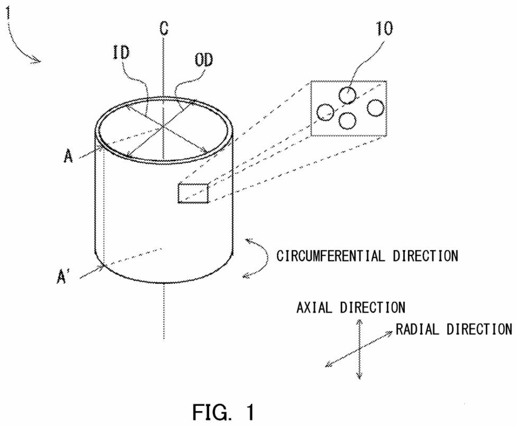

FIG. 1 is an overall view of an insert member 1 for a rotary electric machine (hereinafter referred to as "insert member 1") according to an embodiment, and an enlarged view of a part of an outer peripheral surface thereof. In the present embodiment, a direction along a central axis C of the insert member 1 is defined as an axial direction, and a direction orthogonal to the axial direction and directed from the central axis C toward an outer peripheral surface side of the insert member 1 is defined as a radial direction. In addition, a direction along an outer peripheral surface of the insert member 1 and around the central axis C is referred to as a circumferential direction. The axial direction, the radial direction, and the circumferential direction are merely directions for indicating relative positions of respective elements in the insert member 1.

The insert member 1 according to the present embodiment is, for example, a cast iron material formed in a substantially cylindrical shape centered on the central axis C, and has a plurality of protrusions 10 formed on its outer peripheral surface (i.e., its surface). The rotary electric machine to which the present invention is applied is, for example, a motor used in an electric vehicle or the like. However, the rotary electric machine to which the present invention is applied is not limited thereto. In the present embodiment, an outer diameter OD of the insert member 1 is formed within the range of 150 mm to 300 mm. In addition, the outer diameter OD is a value corresponding to a distance between two parallel planes when the insert member 1 is placed so that the central axis C of the insert member is parallel to the two parallel planes, with the tip end portions 11 of the protrusions 10 on the outer peripheral surface of the insert member 1 being brought into contact with the two parallel planes.

The rotary electric machine includes, for example, components such as a rotating shaft, a rotor, a stator, a motor case, bearings, etc. The motor case includes a tubular portion having a cylindrical inner space. The stator is generally formed of an electromagnetic steel sheet or the like, and is fitted to the inner peripheral portion of the tubular portion. Here, the insert member 1 is used by being cast into an inner peripheral portion of the motor case made of an aluminum alloy. Accordingly, the motor case and the insert member 1 together form a composite structure in which at least a part of the outer peripheral surface of the insert member 1 is covered with the aluminum alloy. In addition, when the stator is fitted into the inner peripheral portion of the insert member 1, the stator is shrink-fitted, but since a linear expansion coefficient of a material of the stator and a linear expansion coefficient of the insert member 1 are close to each other, the fitting strength between the stator and the insert member 1 is maintained even when heat is generated during the operation of the motor.

In general, the operating temperature of the motor is between -30° C and 150° C. The material used for the stator is generally an electromagnetic steel sheet, and when the insert member 1 is formed by using a material having a coefficient of linear expansion which is equal to or more than 10.0×10 ⁻⁶ /K and which is equal to or less than 13.0×10 ⁻⁶ /K, the coefficient of linear expansion of the insert member 1 becomes substantially similar to that of the stator to be fitted. This helps to maintain a high level of fitting strength between the outer periphery of the stator and the inner periphery of the insert member 1 even after the stator is fitted into the insert member 1 cast into the motor case.

As described above, the material of the insert member 1 is not particularly limited as long as the material has sufficient strength as compared with the aluminum alloy used for the motor case and has a linear expansion coefficient within the above range. Typically, it is possible to use flake graphite cast iron such as a material equivalent to JIS FC250 in consideration of manufacturability and workability.

The method of forming the protrusions 10 of the insert member 1 is not particularly limited, but for example, a centrifugal casting method can be used. In addition, the protrusions 10 can also be formed by machining a cylinder made of cast iron.

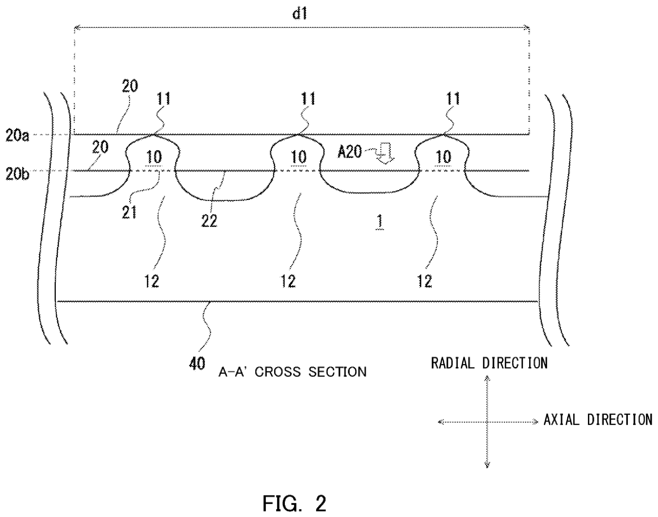

FIG. 2 is a cross-sectional view illustrating an example of a predetermined cut surface of the insert member 1 according to the embodiment. The predetermined cut surface in the present embodiment is one of cut surfaces that appear on both sides of the central axis C when the insert member 1 is cut into two halves along the axial direction by a virtual plane including the central axis C of the insert member 1. The length of one cut surface in the axial direction is equal to or greater than a length d1 to be described later. In FIG. 2, an A-A' cross section in FIG. 1 is illustrated as an example of the predetermined cut surface. In addition, reference numeral 40 shown in FIG. 2 denotes an inner peripheral surface of the insert member 1. Hereinafter, it is referred to as an "inner peripheral surface 40". In the following, the plurality of protrusions 10 provided on the insert member 1 according to the present embodiment will be described using FIG. 2.

The protrusions 10 are a part of the insert member 1 and are formed on the outer peripheral surface of the insert member 1. The protrusions 10 may be arranged in plurality in both the axial and circumferential directions, either with discontinuous and irregular (random) arrangement positions and densities, or with continuous and regular arrangement positions and densities. In addition, the protrusions 10 each have a tip end portion 11 and a base end portion 12, and is formed so as to protrude from the base end portion 12 toward the tip end portion 11 outward in the radial direction of the insert member 1.

Further, on the outer peripheral surface of the insert member 1, the formation of the plurality of protrusions 10 may be limited to certain portions thereof, or machining may be performed such as cutting off some of the plurality of protrusions 10. Accordingly, the plurality of protrusions 10 may be formed only in a partial region of the outer peripheral surface of the insert member 1.

The protrusions 10 may be formed by being cast while applying a centrifugal force using a centrifugal casting method. At this time, the tip end portions 11 of the protrusions 10 are formed with reference to the inner peripheral surface of a mold, and hence, if the inner peripheral surface of the mold is a perfect circle, the distances of the tip end portions 11 from the central axis C of the insert member 1 are substantially equal, whereas the distances of the base end portions 12 from the central axis C may be uneven. Therefore, the heights of the protrusions 10 are measured with reference to the tip end portions 11 in the process of deriving the heights of the protrusions 10 using a substantive portion aggregation chart to be described later. However, the method of forming the protrusions 10 is not limited thereto, but for example, the protrusions 10 may be formed by performing machining such as cutting on an outer peripheral surface of a cylindrical member.

In addition, the shapes of the protrusions 10 are not particularly limited. The protrusions 10 may have, for example, a shape continuously extending in a spiral manner or a shape continuously extending in an annular manner along the circumferential direction. For example, the protrusions 10 can be formed in a spiral or annular shape by directly performing machining such as cutting on the outer peripheral surface of the insert member 1. The shapes of the protrusions 10 need only be effective in the subsequent physical cutting test, tensile simulation, and shear simulation.

### [Substantive Portion Ratio]

A substantive portion (solid portion) region 21 and a non-substantive portion (void portion) region 22 are defined by the protrusions 10 of the insert member 1. As illustrated in FIG. 2, the substantive portion region 21 and the non-substantive portion region 22 are identified depending on whether or not a line segment 20 having a length d1 (an example of a "predetermined axial length" in the present invention) overlaps with the protrusions 10 when the line segment 20 is superimposed on a predetermined cut surface. More specifically, in the range of the length d1, a region in which the line segment 20 overlaps with the protrusions 10 is defined as the substantive portion region 21, and a region in which the line segment 20 does not overlap with the protrusions 10 is defined as the non-substantive portion region 22. Note that the line segment 20 is a virtual line segment parallel to the inner peripheral surface 40 (i.e., parallel to the central axis C) in the predetermined cut surface, and is a line segment provided for convenience to identify the substantive portion region 21 and the non-substantive portion region 22.

A substantive portion ratio is a value indicating a ratio at which the substantive portion region 21 is formed within the range of the length d1. By moving the line segment 20 at a predetermined pitch along the direction of an arrow A20 in FIG. 2 (from the tip end portion 11 side to the base end portion 12 side in the radial direction), it is possible to obtain the length of the substantive portion region 21 at a measurement height at an optional measurement point among measurement heights which are distances from the tip end portion 11 in the radial direction. At this time, at an optional measurement height, the ratio of the sum of the lengths of sections in the substantive portion region 21 to the length d1 is referred to as the "substantive portion ratio". The same operation is performed on a plurality of cross sections, so that the substantive portion ratios of the protrusions 10 in each cut surface are aggregated, and the substantive portion ratios at the measurement height of each measurement point are averaged, whereby an average substantive portion ratio, which is an average value of the substantive portion ratios based on the plurality of cross sections at the optional measurement height, can be obtained.

### [Substantive Portion Aggregation Chart]

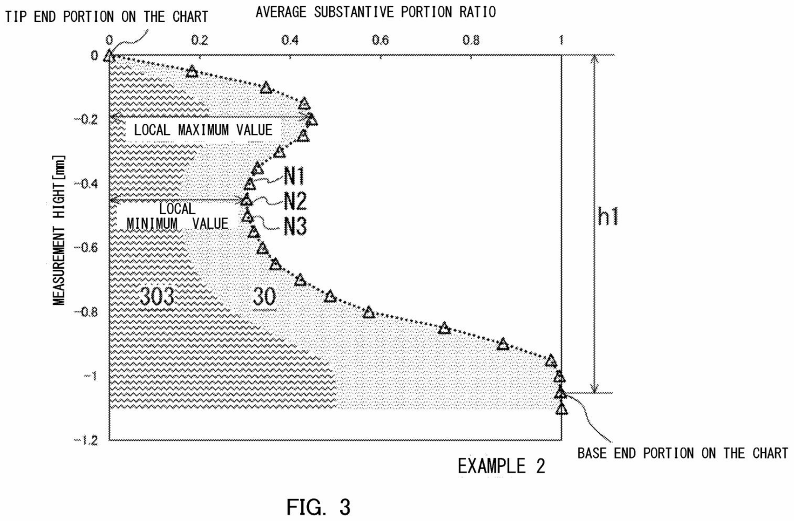

As illustrated in FIG. 2, by moving the line segment 20 toward the base end portions 12 (i.e., moving the line segment 20 along the direction of the arrow A20) at the predetermined pitch, repeatedly obtaining the substantive portion ratio until the substantive portion ratio reaches 1.00, and plotting the thus obtained substantive portion ratios on a graph, it is possible to graph the shapes of the plurality of protrusions 10 appearing on the predetermined cut surface as a single aggregate shape. This is referred to as the "substantive portion aggregation chart". The substantive portion aggregation chart is a graph in which the vertical axis represents the measurement height, which is the distance from the tip end portions 11 in the height direction of the protrusions 10, and the horizontal axis represents the substantive portion ratio thereof. In addition, by performing the work of obtaining substantive portion ratios on a plurality of predetermined cut surfaces and creating an average substantive portion aggregation chart, the formation state of the protrusions 10 in the insert member 1 can be grasped on average. At this time, in any predetermined cut surface, the reference point in the height direction is "the tip end portion 11 of the protrusion 10 that protrudes most among the plurality of protrusions 10 within the range of the length d1 (predetermined axial length)", and the pitch at which the line segment 20 is moved is also the same pitch. In this way, the measurement heights can also be uniquely determined even for the plurality of predetermined cut surfaces. Also, in the present embodiment, a protrusion identified by a graph shape appearing in the average substantive portion aggregation chart is referred to as an "aggregated protrusion" in the average substantive portion aggregation chart. FIG. 3 illustrates, as an example of the insert member 1 according to the present embodiment, the average substantive portion aggregation chart in which average substantive portion ratios that can be intermittently obtained from six predetermined cut surfaces of a certain sample are plotted in sequence, with the predetermined pitch being 0.05 mm and the length d1 being 14.7 mm. As illustrated in FIG. 3, a protrusion identified by a graph shape appearing in the average substantive portion aggregation chart is shown as an aggregated protrusion 30.

### [Measurement Method]

Hereinafter, a method of measuring the substantive portion region 21 and the non-substantive portion region 22 will be described using FIG. 2. First, a method of preparing a measurement sample will be described. The insert member 1 cut in a direction including the central axis C and along the axial direction is further cut into a size capable of resin embedding and polishing, and resin embedding is performed with one cut surface for measuring the substantive portion ratio facing downward. After the resin has solidified, the one cut surface side is polished with water-resistant emery paper in running water. At this time, the grit size of the waterproof emery paper is changed in the following order: #220, #400, #800, #1000, and #1500. After polishing is completed, the measurement of the substantive portion ratio is performed. The surface observed after polishing corresponds to the predetermined cut surface.

In the present embodiment, a digital microscope RX-100 manufactured by HIROX Co., Ltd. was used for the measurement of the substantive portion ratio. In addition, an objective lens magnification during measurement of 20x or 50x was used, and a grid and an automatic width tool by software attached to the microscope were used. The measurement sample after polishing as described above is set so that the inner peripheral surface 40 of the insert member 1 is parallel to the horizontal axis of the grid displayed on an observation monitor. Thereafter, the measurement sample is translated to a position where the outer peripheral surface of the insert member 1 can be observed. Then, the measurement sample is measured in the horizontal axis direction using the automatic width tool. The measurement using the automatic width tool is an automatic measurement using gradation density, and hence the gradation density is adjusted each time to ensure proper automatic identification between an insert member area corresponding to the substantive portion region 21 and a resin area corresponding to the non-substantive portion region 22, and then the tool is relatively moved at the predetermined pitch to measure the length of the substantive portion region 21 at any measurement height. The line segment 20 in the present embodiment indicates the measurement position of the automatic width tool. By moving the line segment 20 along the radial direction of the insert member 1 from the tip end portion 11 side toward the base end portion 12 side, it is possible to measure the axial length of the substantive portion region 21 at any measurement height from the tip end portion 11. At this time, the measurement is performed by moving the line segment 20 on one cut surface from the tip end portion 11 of the protrusion 10, which protrudes most in the range of the length d1, toward the base end portion 12 side thereof at a predetermined pitch of 0.05 mm or 0.025 mm.

FIG. 2 illustrates a case where the line segment 20 is located at a position 20a and a case where the line segment 20 is located at a position 20b. When the line segment 20 is at the measurement height indicated by the position 20a, the line segment 20 overlaps with the most protruding tip end portion 11 within the length d1. Using this as a reference, the line segment 20 is moved in the direction of the arrow A20 (towards the base end portion 12 side). The position 20b is an example of the measurement height in a case where the movement of the line segment 20 is repeated any number of times at the predetermined pitch. When the line segment 20 is located at the position indicated by the position 20b, it can be said that the insert member 1 forms the substantive portion region 21, indicated by broken lines, and the non-substantive portion region 22, indicated by solid lines, of the line segment 20. The line segment 20 is moved along the arrow A20, and from a position where the substantive portion ratio to be described later exceeds 0.98 for the first time, the line segment 20 is further moved along the arrow A20, and when the entire range of the length d1 in the line segment 20 becomes the substantive portion region 21 (i.e., when the substantive portion ratio becomes 1.00), the measurement is ended.

### [Parameters for Average Substantive Portion Aggregation Chart]

FIG. 3 illustrates an average substantive portion aggregation chart plotting in sequence average substantive portion ratios based on a certain sample. As illustrated in FIGS. 2 and 3, in the average substantive portion aggregation chart, a position corresponding to "the tip end portion 11 of the most protruding protrusion 10 among the plurality of protrusions 10 within the range of the length d1" is referred to as "a tip end portion on the chart". The tip end portion on the chart is a position that coincides with the tip end portion of the above-described aggregated protrusion 30. The measurement height at the tip end portion on the chart is 0 mm, and the average substantive portion ratio thereof is 0. In addition, "a position at which the average substantive portion ratio exceeds 0.98 for the first time among the points plotted in the average substantive portion aggregation chart" is referred to as "a base end portion on the chart".

The average substantive portion aggregation chart illustrated in FIG. 3 shows a local maximum peak value and a local minimum peak value. The local maximum peak value indicates an average substantive portion ratio at a local maximum peak among peaks in "an average substantive portion curve", which is obtained by connecting measurement points plotted on the average substantive portion aggregation chart with a line, and the local minimum peak value indicates an average substantive portion ratio at a local minimum peak among peaks in the average substantive portion curve plotted on the average substantive portion aggregation chart. In the example of the average substantive portion aggregation chart illustrated in FIG. 3, the absolute value of the measurement height from the tip end portion on the chart to the local maximum peak is 0.20 mm, and the local maximum peak value is 0.45, whereas the absolute value of the measurement height from the tip end portion on the chart to the local minimum peak is 0.45 mm, and the local minimum peak value is 0.30. In this case, the local maximum peak appears closer to the tip end portion side on the chart in the measurement height direction than the local minimum peak.

An average maximum height h1 of the aggregated protrusion 30 illustrated in FIG. 3 is a distance from the tip end portion to the base end portion on the vertical axis of the average substantive portion aggregation chart. The substantive portion ratio at each measurement point of the substantive portion aggregation chart is measured from the tip end portion 11 side of the protrusion 10 positioned on the upper side toward the central axis C side positioned on the lower side, and thus the measurement height at each measurement point is displayed as a negative value. The same applies to the average substantive portion aggregation chart obtained from a plurality of substantive portion aggregation charts, but the average maximum height h1 of the actual protrusions 10 is the absolute value of a value on the vertical axis on the average substantive portion aggregation chart.

In the present embodiment, the protrusions 10 are each formed in such a manner that its local maximum peak value is ≦ 0.50 in the average substantive portion aggregation chart. Accordingly, the protrusions 10 are each formed in such a manner that its base end portion 12 side is wider than its tip end portion 11 side. According to this, when the insert member 1 is cast with an aluminum alloy, the aluminum alloy to be poured into the mold can be easily poured to the base end portion 12 side of the protrusions 10, thus making it possible to prevent voids from occurring at the joining portion between the insert member 1 and the motor case. In addition, when a load is applied to the protrusions 10, the protrusions 10 are less likely to break. The shape of the tip end portion 11 of each protrusion 10 is not particularly limited, and for example, the tip end portion 11 thereof may be formed in a round shape, a square or angular shape, or a flat shape as long as the local maximum peak value thereof is ≤ 0.50.

In the aggregated protrusion 30 in the average substantive portion aggregation chart, a plurality of protrusions 10 may be formed in such a manner that the local maximum peak appears closer to the tip end portion side on the chart than the local minimum peak. In addition, in the average substantive portion aggregation chart, the sum of the average substantive portion ratios in the range from the center position of the average maximum height h1 of the aggregated protrusion 30 to the base end portion on the chart, excluding the position of the base end portion on the chart, may be greater than the sum of the average substantive portion ratios in the range from the center position of the average maximum height h1 of the aggregated protrusion 30 to the top end portion on the chart, excluding the position of the top end portion on the chart. Here, in a case where the center position of the average maximum height h1 of the aggregated protrusion 30 coincides with the measurement point of the average substantive portion ratio, the center position of the average maximum height h1 of the aggregated protrusion 30 should be included on the tip end portion side in the chart. According to these, it is possible to determine whether or not the tip end portion side on the chart is thinner than the base end portion side on the chart in the aggregated protrusion 30.

In the aggregated protrusion 30, the position of the local maximum peak may be closer to the base end portion side on the chart than the tip end portion on the chart where the measurement height is 0 mm. According to this, in the aggregated protrusion 30, no local maximum peak is formed at the tip end portion on the chart, and hence, it is possible to prevent the tip end portions 11 of the protrusions 10 from being damaged or broken.

The average substantive portion ratio may include two or more measurement points within a range in which a difference in average substantive portion ratio between two or more measurement points among a plurality of measurement points plotted in the average substantive portion aggregation chart is 0.10 or less and a difference in measurement height between the two or more measurement points among them is 0.05 mm or more. FIG. 3 illustrates a plot of points N1 to N3 as one example. The values plotted at points N1 to N3 fall within a range in which the difference in average substantive portion ratio is 0.007 at the maximum and the difference in measurement height is 0.10 mm at the maximum. In this manner, in a case where the difference in average substantive portion ratio between two or more measurement points is 0.10 or less and the difference in measurement height between two or more measurement points is 0.05 mm or more, the slope of the average substantive portion curve becomes steep in the average substantive portion aggregation chart. Thus, in a part of the aggregated protrusion 30 in the average substantive portion aggregation chart, where the slope of the average substantive portion curve is steep, some of a plurality of protrusions 10 will be formed substantially perpendicular to the outer peripheral surface of the insert member 1 on average. According to this, for example, even in the case of a graph shape in which a local maximum peak does not appear in the aggregated protrusion 30, it is possible to improve the joining strength between the motor case and the insert member 1 by having a place where the slope of the graph is steep in a part of the aggregated protrusion 30.

In the average substantive portion aggregation chart, a difference between the local maximum peak value and the local minimum peak value may be 0.02 or more and 0.20 or less. When the difference between the local maximum peak value and the local minimum peak value is less than 0.02, there is a risk that the joining strength between the motor case and the insert member 1 may decrease as compared with a case where the difference between the local maximum peak value and the local minimum peak value is 0.02 or more. In addition, when in the case where the difference between the local maximum peak value and the local minimum peak value exceeds 0.20, when the insert member 1 is cast with an aluminum alloy, the aluminum alloy to be poured into the mold may be difficult to flow into the base end portion 12 side of the protrusions 10, or a part of the protrusions 10 to be formed may be broken or damaged. On the other hand, by setting the difference between the local maximum peak value and the local minimum peak value to 0.02 or more and 0.20 or less, it is possible to ensure high joining strength while preventing breakage of the protrusions 10.

In the average substantive portion aggregation chart, the local minimum peak value may be 0.08 or more. In a case where the local minimum peak value is less than 0.08, there is a risk that formation of the protrusions 10 during the manufacturing process of the insert member 1 may become difficult, or there is also a risk that the protrusions 10 may become prone to breakage. On the other hand, by setting the average substantive portion ratio of the local minimum peak value to 0.08 or more, it is possible to suppress the number of the protrusions 10 from becoming excessively small. In addition, insufficient strength due to excessive thinning of the protrusions 10 is eliminated, thus making the protrusions 10 less prone to breakage.

In the average substantive portion aggregation chart, the local maximum peak value may be 0.50 or less, and more preferably 0.45 or less. In a case where the local maximum peak value is larger than 0.50, there is a risk that the aluminum alloy poured into the mold does not easily spread between the plurality of protrusions 10 when the insert member 1 is cast with the aluminum alloy. In particular, there is a concern that the aluminum alloy is unlikely to spread to the base end portion 12 side. Further, there is also a risk that the edges of the protrusions 10 may be chipped in the vicinity of the position where the value of the average substantive portion ratio becomes the local maximum peak, or that the protrusions 10 may be prone to breakage in the vicinity of the position where the value of the average substantive portion ratio becomes the local minimum peak. On the other hand, when the maximum peak value is 0.50 or less, more preferably 0.45 or less, these problems can be prevented.

### [Testing and Simulation]

Testing and simulation using samples were performed to evaluate the insert members 1 of Examples 1 to 13 of the present invention and an insert member according to the Comparative Example. Specifically, the insert members of the Examples and the Comparative Example (hereinafter, referred to as the Examples and the like) were subjected to measurement and evaluation of various parameters, physical cutting tests, tensile simulations, and shear simulations.

### [Measurement and Evaluation of Various Parameters]

The measurement and evaluation of various parameters of the insert members according to the respective Examples and the like were performed. Table 1 shows the results of respective items of the insert members according to the Examples and the like. In addition, for the insert members according to the Examples and the like, the predetermined pitch was set to 0.05 mm or 0.025 mm, the length d1 was set to 14.7 mm or 5.57 mm, and in a case where the average maximum height h1 of the protrusions was small, a high objective lens magnification was selected, and average substantive portion aggregation charts were created. Note that as a reference example, various parameters of an insert member having no protrusion 30 are shown in Table 1.

### [1. Ratio of Average Maximum Height H1 of Protrusions to Outer Diameter OD]

In item 1, in the average substantive portion aggregation chart in each of the Examples and the like, the ratio of the average maximum height h1 of the aggregated protrusion 30 to the outer diameter OD of the insert member was obtained as a percentage. Thus, it was confirmed whether or not the aggregated protrusion 30 in each of the Examples and the like was formed within a range of 0.08 % or more and 1 % or less of the outer diameter OD of the insert member.

### [2. Whether or Not the Tip End Portion Side on the Chart was Thicker Than the Base End Portion Side on the Chart]

In item 2, it was determined, based on the average substantive portion aggregation chart in each of the Examples and the like, whether or not the sum of the average substantive portion ratios excluding the position of the tip end portion on the chart was larger than the sum of the average substantive portion ratios excluding the position of the base end portion on the chart, in the range from the center position of the average maximum height h1 of the aggregated protrusion 30 to the tip end portion on the chart. When it was determined, based on the average substantive portion aggregation chart in each of the Examples and the like, that the base end portion side on the chart of the aggregated protrusion 30 was larger than the tip end portion side on the chart thereof (i.e., when the base end portion side on the chart was thicker), it was marked with a circle "o", whereas when the base end portion side on the chart of the aggregated protrusion 30 was equal to or smaller than the tip end portion side on the chart thereof, it was marked with "x".

### [3. Whether or Not Two or More Measurement Points were Included Where Difference in Average Substantive Portion Ratio was 0.10 or less and Difference in Measurement Height was 0.05 mm or more]

In item 3, it was determined whether or not the average substantive portion ratios plotted in the average substantive portion aggregation chart in each of the Examples and the like included two or more measurement points where a difference in average substantive portion ratio therebetween was 0.10 or less and a difference in measurement height therebetween was 0.05 mm or more. When points that were able to match the conditions specified above were included, it was marked with "o", whereas when not included, it was marked with "x".

### [4. Presence or Absence of Local Maximum Peak and Local Minimum Peak]

In item 4, in the average substantive portion aggregation chart in each of the Examples and the like, when a local maximum peak and a local minimum peak were present, and when the local maximum peak was located closer to the tip end portion side on the chart than the center position of the average maximum height h1 of the protrusions, and was also located closer to the tip end portion side on the chart than the local minimum peak, it was marked with "o", whereas when the local maximum peak was located closer to the tip end portion side on the chart than the center position of the average maximum height h1 of the protrusions, and was also located closer to the base end portion side on the chart than the local minimum peak, or when no peak appeared on the average substantive portion aggregation chart, it was marked with "x".

### [5. Local Minimum Peak Value] [6. Difference Between Local Maximum Peak Value and Local Minimum Peak Value]

In item 5, the minimum peak value was obtained based on the average substantive portion aggregation chart in each of the Examples and the like. In item 6, the difference between the maximum peak value and the minimum peak value was obtained based on the average substantive portion aggregation chart in each of the Examples and the like.

### [7. Position of Local Maximum Peak]

In item 7, when it was determined, based on the average substantive portion aggregation chart in each of the Examples and the like, that the maximum peak was located closer to the base end portion side on the chart than the tip end portion on the chart, it was marked with "o", whereas when no peak appeared on the average substantive portion aggregation chart was marked with "x".

**[Table 1]**

| | 1. | 2. | 3. | 4. | 5. | 6. | 7. |
|---|---|---|---|---|---|---|---|
| Example 1 | 0.38 | ○ | ○ | ○ | 0.20 | 0.03 | ○ |
| Example 2 | 0.40 | ○ | ○ | ○ | 0.31 | 0.15 | ○ |
| Example 3 | 0.44 | ○ | ○ | ○ | 0.28 | 0.16 | ○ |
| Example 4 | 0.38 | ○ | ○ | ○ | 0.08 | 0.02 | ○ |
| Example 5 | 0.26 | ○ | ○ | ○ | 0.18 | 0.10 | ○ |
| Example 6 | 0.18 | ○ | ○ | X | - | - | X |
| Example 7 | 0.26 | ○ | ○ | X | - | - | X |
| Example 8 | 0.36 | ○ | ○ | ○ | 0.16 | 0.02 | ○ |
| Example 9 | 0.42 | ○ | ○ | X | - | - | X |
| Example 10 | 0.28 | ○ | ○ | X | - | - | X |
| Example 11 | 0.26 | ○ | ○ | X | - | - | X |
| Example 12 | 0.24 | ○ | ○ | X | - | - | X |
| Example 13 | 0.08 | ○ | ○ | X | - | - | X |
| Comparative Example | 0.05 | ○ | X | X | - | - | X |
| Reference Example | - | X | X | x | - | - | X |

| | | | | | | | |
|---|---|---|---|---|---|---|---|
| 1. Ratio of average maximum height h1 of protrusions to outer diameter OD [%] 2. Whether or not tip end portion side of protrusion was thicker than its base end portion side 3. Whether or not two or more measurement points were included where difference in average substantive portion ratio was 0.10 or less and difference in measurement height was 0.05 mm or more 4. Presence or absence of local maximum peak Closer to tip end portion side than local minimum peak: o Closer to base end portion side than local minimum peak, or local maximum peak is absent: x 5. Local minimum peak value 6.Difference between local maximum peak value and local minimum peak value 7. Whether or not position of local maximum peak was closer to protrusion's base end portion side than protrusion's tip end portion side | | | | | | | |

The insert members according to the Examples and the like measured as shown in Table 1 were further subjected to a physical cutting test, a tensile simulation, and a shear simulation. Hereinafter, the test and simulation will be described.

### [Physical cutting test]

In a physical cutting test, an insert member in each of the Examples and the like was cast with an aluminum alloy corresponding to a motor case. In addition, the joining strength was verified by cutting out a test piece measuring 20 mm square while the insert member and the aluminum alloy were in a joined state. At this time, in a case where the joining between the insert member and the aluminum alloy was maintained in all six test pieces that were subjected to the physical cutting test, it was rated as A0; in a case where the insert member and the aluminum alloy were peeled off in a part of the test pieces, it was rated as B0; and in a case where the insert member and the aluminum alloy were peeled off in all of the six test pieces subjected to the physical cutting test, it was rated as C0. The results are shown in Table 4, and details will be discussed later.

### [Tensile Simulation]

In general, when the insert member cast with the aluminum alloy is cut out from its cast state, the aluminum alloy located outside the insert member undergoes solidification shrinkage and thermal contraction during the cooling process after die casting, so that a part of a tightening force is released from a state in which the protrusions formed on the outer peripheral surface of the insert member are tightened to join the insert member and the aluminum alloy to each other. Therefore, it is difficult to measure the actual joining strength. In contrast, in this simulation, a protrusion was formed by aggregating a plurality of protrusions into one based on an average substantive portion aggregation chart, and a difference in radial displacement of the protrusion when a difference in the amount of expansion occurs due to a difference in linear expansion coefficient between the aluminum alloy and the insert member made of cast iron was evaluated using a simulation based on CAE analysis. In this case, the evaluation was performed under the following temperature conditions: a high temperature of 150 °C, and a medium temperature of 85 °C. A typical example will be described with reference to FIG. 3.

As described above, FIG. 3 illustrates an aggregated protrusion 30 having a shape in which a plurality of protrusions 10 are aggregated into one on the basis of an average substantive portion aggregation chart. The aggregated protrusion 30 is defined by a region where, in the average substantive portion aggregation chart, the vertical axis direction can be regarded as the radial direction of the insert member 1, and the horizontal axis direction can be regarded as the axial direction of the insert member 1. The aggregated protrusion 30 is reduced so that the length of the aggregated protrusion 30 in the vertical axis direction is maintained while the length of the aggregated protrusion 30 in the horizontal axis direction in the average substantive portion aggregation chart is 1/2 (referred to as a "reduced aggregated protrusion"), and is then rotated about the vertical axis of the average substantive portion aggregation chart as the axis of symmetry, whereby a model of the protrusion (referred to as "model protrusion") can be determined in which the protrusion shapes of the insert member 1 are aggregated into one. Here, the reason for reducing the length in the horizontal axis direction of the aggregated protrusion 30 by half is to define the model protrusion that combines into one the protrusion shapes existing in the range of the length d1, and to perform a simulation using the model protrusion. By converting the length of the reduced aggregated protrusion in the horizontal axis direction to the length d1, the thickness of the reduced aggregated protrusion is determined. In this simulation, a model was created in which an insert member having two model protrusions formed on its outer peripheral surface at 180° opposite each other was cast using an aluminum alloy, and a tensile evaluation simulating thermal expansion was performed by simulating the radial displacement of this model when subjected to temperature changes under the above temperature conditions using CAE analysis. At this time, determination was performed, as shown in Table 2, based on the difference in displacement in the radial direction between the aluminum alloy and the insert member, and the ratio of the difference in displacement to the average maximum height h1 of the protrusion.

**[Table 2]**

| Determination | Determination sign |
|---|---|
| Difference in radial displacement is 10 µm or less | A1 |
| Difference in radial displacement is 50 % or less of average maximum height h1 of protrusions | B1 |
| Difference in radial displacement exceeds 50 % of average maximum height h1 of protrusions | C1 |

### [Shear Simulation]

In a shear simulation, a model was created in which an insert member with one model protrusion formed on its outer peripheral surface was cast with an aluminum alloy, and a shear evaluation was performed assuming a shaft torque applied to the insert member. In this simulation, a load simulating a shear occurring in the axial and circumferential directions was applied to the model projection cast from an aluminum alloy. At this time, assuming that a load corresponding to a motor shaft torque was applied to the outer peripheral surface of the insert member, a shear load was determined, as shown in Table 3, based on the ratio of a displacement difference in the radial direction between the aluminum alloy and the insert member to the average maximum height h1 of the protrusion.

**[Table 3]**

| Determination | Determination sign |
|---|---|
| Difference in radial displacement is less than 0.1 % of average maximum height h1 | A2 |
| Difference in radial displacement is 0.1 % or more and less than 0.5 % of average maximum height h1 | B2 |
| Difference in radial displacement is more than 0.5 % of average maximum height h1 | C2 |

The results of the physical cutting test, the tensile simulation, and the shear simulation measured as described above, and overall evaluations based on these results are shown in Table 4.

**[Table 4]**

| | Substantive portion cutting evaluation | CAE evaluation | | | Overall evaluation |
|---|---|---|---|---|---|
| | | Tensile evaluation | | Shear evaluation | |
| | | High temperature condition | Medium temperature condition | | A: very good |
| | | | | | B: good |
| | | | | | C: bad |
| Example 1 | A0 | A1 | A1 | A2 | A |
| Example 2 | A0 | A1 | A1 | A2 | A |
| Example 3 | A0 | A1 | A1 | A2 | A |
| Example 4 | A0 | A1 | A1 | A2 | A |
| Example 5 | A0 | A1 | A1 | A2 | A |
| Example 6 | B0 | B1 | B1 | B2 | B |
| Example 7 | A0 | B1 | B1 | A2 | B |
| Example 8 | A0 | A1 | A1 | A2 | A |
| Example 9 | A0 | B1 | B1 | A2 | B |
| Example 10 | B0 | B1 | B1 | A2 | B |
| Example 11 | A0 | B1 | B1 | B2 | B |
| Example 12 | A0 | B1 | B1 | B2 | B |
| Example 13 | B0 | B1 | B1 | B2 | B |
| Comparison Example | C0 | C1 | B1 | B2 | C |

In the overall evaluations, an overall rating of A is assigned when all three tests - the physical cutting test, the tensile simulation, and the shear simulation - receive A ratings; an overall rating of C is assigned when any one of the physical cutting test, the tensile simulation, or the shear simulation receives a C rating; and for all other results, an overall rating of B is assigned.

Based on the above results and referring to the Examples and the like, it has been confirmed that the average maximum height h1 of the aggregated protrusion 30 is preferably formed within a range of 0.08 % or more and 1 % or less of the outer diameter OD, and it is more preferable that the average maximum height h1 of the aggregated protrusion 30 be formed at 0.26 % or more of the outer diameter OD. It has also been confirmed that when the average maximum height h1 of the aggregated protrusion 30 is less than 0.26 %, the joining strength between the insert member and the motor case decreases.

From the above results, by comparing Examples 1 to 5, 8 with Examples 6, 7, 9 to 13 and the Comparative Example, it has been confirmed that when the local minimum peak value is 0.08 or more, the results of the tensile simulation and the shear simulation are excellent even under high temperature conditions. Similarly, it has been confirmed that the difference between the local maximum peak value and the local minimum peak value is preferably 0.02 or more.

In view of these results, it can be said that the insert member 1 according to the present embodiment can prevent insufficient joining strength with the motor case.

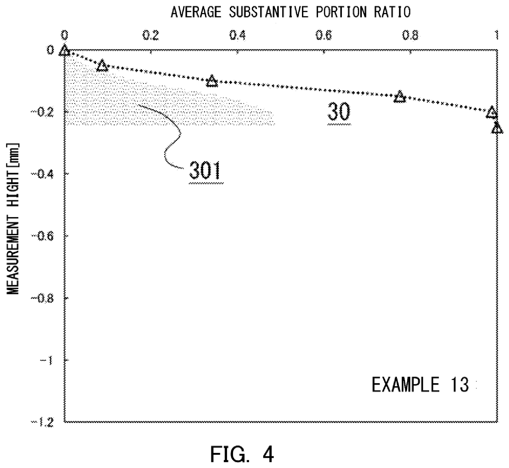

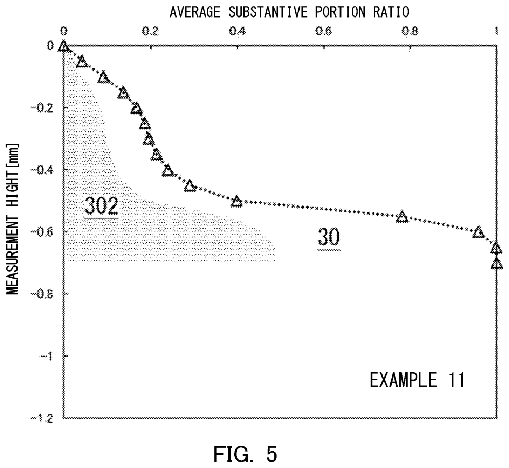

Next, among the above-mentioned test and simulations, Examples 13, 11, and 2 will be used as examples to explain an average substantive portion aggregation chart and the form of the insert member 1 in each of the Examples. FIG. 4 is an average substantive portion aggregation chart of the insert member 1 in Example 13 according to the present embodiment. FIG. 5 is an average substantive portion aggregation chart of the insert member 1 in Example 11 according to the present embodiment. FIG. 3 is an average substantive portion aggregation chart of the insert member 1 in Example 2 according to the present embodiment. Hereinafter, the average substantive portion aggregation chart and the insert member 1 in each of the Examples according to the present embodiment will be described with reference to FIG. 4 for Example 13, FIG. 5 for Example 11, and FIG. 3 for Example 2, respectively.

FIG. 4 illustrates a reduced aggregated protrusion 301 obtained by reducing the aggregated protrusion 30 of Example 13 to 1/2 in its length in the horizontal axis direction of the average substantive portion aggregation chart. In view of the model protrusion based on the reduced aggregated protrusion 301, it has been confirmed that in the insert member 1 according to the average substantive portion aggregation chart illustrated in FIG. 4, the aggregated protrusion 30 has a substantially triangular cross-sectional shape protruding in the radial direction, and also has a shape spreading from its tip end portion 11 to its base end portion 12. In addition, the protrusions 10 formed on the insert member 1 may exist individually, or may be formed continuously along the circumferential direction. Further, in the case of the protrusions 10 being continuously formed along the circumferential direction, they may be arranged in a spiral shape on the outer peripheral surface of the insert member 1, or may be formed annularly and continuously in the circumferential direction. In Example 13, the maximum height of the aggregated protrusion 30 is formed to be 0.08 % or more of the outer diameter OD of the insert member 1, and it has been confirmed that the insert member 1 and the motor case on the outer peripheral surface side thereof has a practical joining strength.

FIG. 5 illustrates a reduced aggregated protrusion 302 obtained by reducing the aggregated protrusion 30 of Example 11 to 1/2 in its length in the horizontal axis direction of the average substantive portion aggregation chart. In view of the model protrusion based on the reduced aggregated protrusion 302, it has been confirmed that the insert member 1 according to the average substantive portion aggregation chart illustrated in FIG. 5 has a steep portion in its average substantive portion curve. When the average substantive portion curve is formed so as to have a portion with a steep slope, forces caused by the solidification shrinkage and thermal shrinkage of the aluminum alloy in the circumferential direction are more likely to occur in the circumferential direction, and excellent results were obtained without peeling even in the physical cutting test, thus confirming that this helps to improve the joining strength between the insert member 1 and the motor case on the outer peripheral surface side thereof.

FIG. 3 illustrates a reduced aggregated protrusion 303 obtained by reducing the aggregated protrusion 30 of Example 2 to 1/2 in its length in the horizontal axis direction of the average substantive portion aggregation chart. According to this, in the insert member 1 according to the average substantive portion aggregation chart illustrated in FIG. 3, the aggregated protrusion 30 has, for example, a hook shape in which a local maximum peak and a local minimum peak are formed in an intermediate portion between the tip end portion 11 and the base end portion 12, as illustrated in FIG. 2. Also, in this case, it has been confirmed that the local maximum peak appears closer to the tip end portion side on the chart than the local minimum peak in the average substantive portion aggregation chart.

As described above, in the form of Example 2, the protrusions 10 formed on the outer peripheral surface of the insert member 1 each statistically has a hook shape. According to this, the hook shape of each protrusion 10 firmly engages with the motor case on the outer peripheral surface side, so that the joining strength between the insert member 1 and the motor case on the outer peripheral surface side is significantly improved.

### [Operation and Effects]

By forming the protrusions 10 on the outer peripheral surface of the insert member 1, it is possible to improve the joining strength between the insert member 1 and the motor case on the outer peripheral surface side. In addition, it is also possible to prevent displacement or deviation of the insert member 1 with respect to the motor case in the axial direction, the circumferential direction, and the radial direction.

If the plurality of protrusions 10 are arranged on the outer peripheral surface of the insert member 1 in such a manner that the protrusions 10 adjacent to each other are appropriately spaced apart from each other, the aluminum alloy poured into the mold will spread appropriately between the plurality of protrusions 10. As a result, it is possible to suppress the generation of gaps between the motor case and the insert member 1, thereby making it possible to improve the joining strength between the motor case and the insert member 1. In particular, even in motor cases produced by a gravity casting method in which it is considered difficult for an aluminum alloy to reach every corner, the aluminum alloy can easily reach between the protrusions on the outer peripheral surface of the insert member 1.

In addition, the insert member 1 is firmly fixed to the motor case in the axial direction, the circumferential direction, and the radial direction. This allows the inner periphery of the insert member 1 to be machined to form a stator holder, with a stator fitted to the inner peripheral surface 40 thereof, thus making it possible to suppress displacement of the stator in any direction even when the motor is operated. As a result, improvements in reliability, durability, and continuous use time of the motor can be expected, as well as reduced loss and improved performance due to reduced friction.

The insert member 1 of the present invention can maintain the joining strength between the motor case and the insert member 1, thereby making it possible to prevent the occurrence of misalignment or slight gaps between the insert member 1 and the motor case. In addition, during motor operation, preventing such misalignment and gaps can avoid that the surfaces in these gaps are struck by microvibrations to cause wear and reduce the durability of the motor itself.

Hereinabove, the embodiment according to the present invention has been described, but each aspect disclosed in the present specification can be combined with any other feature disclosed in the present specification.

### [Reference Signs List]

- 1: : INSERT MEMBER FOR ROTARY ELECTRIC MACHINE
- 10: : PROTRUSIONS
- 20: : LINE SEGMENT
- 30: : AGGREGATED PROTRUSION
- C: : CENTER AXIS OF INSERT MEMBER

## Claims

1. An insert member for a rotary electric machine, which is a substantially cylindrical insert member to be cast into an aluminum alloy motor case of the rotary electric machine, wherein a plurality of protrusions are formed on an outer peripheral surface of the insert member;
in one cut surface, which is one of cut surfaces appearing one by one on both sides of a central axis of the insert member when the insert member is cut into two halves along an axial direction by a virtual plane including the central axis, the insert member defines, in a range of a predetermined axial length, a substantive portion region in which, on a line segment parallel to an inner peripheral surface of the insert member, the protrusions overlap with the line segment when the line segment is superimposed on the one cut surface, and a non-substantive portion region in which, on the line segment, the protrusions do not overlap with the line segment when the line segment is superimposed on the one cut surface;
on the line segment, a value indicating a proportion of the substantive portion region within the range of the predetermined axial length is defined as a substantive portion ratio;
in the one cut surface of the insert member, sequentially plotting values of the substantive portion ratios at respective measurement points obtained by moving the line segment from tip end portions of the protrusions toward their base end portion side at a predetermined pitch along a height direction of the protrusions, and a diagram, in which the substantive portion ratio is represented on a horizontal axis and a distance from the tip end portion in the height direction is represented as a measurement height on a vertical axis, is defined as a substantive portion aggregation chart;
an average substantive portion ratio is defined as an average of the substantive portion ratios at the respective measurement points determined by a plurality of the one cut surfaces, and the substantive portion aggregation chart in which the average substantive portion ratio is plotted is defined as an average substantive portion aggregation chart;
in the average substantive portion aggregation chart, a position at which the average substantive portion ratio is 0 is defined as a tip end portion on the chart, and a position at which the average substantive portion ratio plotted in sequence from the tip end portion side toward the base end portion side exceeds 0.98 for the first time is defined as a base end portion on the chart;
when a distance from the tip end portion on the chart to the base end portion on the chart is defined as an average maximum height of the protrusions, the average maximum height of the protrusions is 0.08 % or more of an outer diameter of the insert member; and
in the average substantive portion aggregation chart, a sum of the average substantive portion ratios in a range from a center position of the average maximum height of the protrusions to the base end portion on the chart, excluding a position of the base end portion on the chart, is greater than a sum of the average substantive portion ratios in a range from the center position of the average maximum height of the protrusions to the tip end portion on the chart, excluding a position of the tip end portion on the chart.

2. The insert member for a rotary electric machine according to claim 1, wherein the average maximum height of the protrusions is formed within a range of 0.08 % or more and 1 % or less of the outer diameter of the insert member.

3. The insert member for a rotary electric machine according to claim 1 or 2, wherein two or more measurement points, which are plotted in the average substantive portion aggregation chart, are included in a range in which a difference in the average substantive portion ratio at the two or more measurement points is 0.10 or less and a difference in the measurement height at the two or more measurement points is 0.05 mm or more.

4. The insert member for a rotary electric machine according to any one of claims 1 to 3, wherein
a plurality of the average substantive portion ratios plotted in the average substantive portion aggregation chart have a local maximum peak in the values of the average substantive portion ratios and a local minimum peak in the values of the average substantive portion ratios; and
a position of the local maximum peak appears closer to the tip end portion side on the chart than a position of the local minimum peak.

5. The insert member for a rotary electric machine according to claim 4, wherein in the average substantive portion aggregation chart, the value of the average substantive portion ratio at the local minimum peak is 0.08 or more.

6. The insert member for a rotary electric machine according to claim 4, wherein in the average substantive portion aggregation chart, a difference between a value of the average substantive portion ratio at the local maximum peak and a value of the average substantive portion ratio at the local minimum peak is 0.02 or more and 0.20 or less.

7. The insert member for a rotary electric machine according to claim 4, wherein in the average substantive portion aggregation chart, a value of the average substantive portion ratio at the local maximum peak is 0.50 or less.

8. The insert member for a rotating electric machine according to claim 1, wherein on the outer peripheral surface of the insert member, the protrusions are formed only in a partial region of the outer peripheral surface.
